# EUROPEAN PATENT SPECIFICATION

(11) **EP 4 472 129 B1**
(45) Date of publication and mention of the grant of the patent: **13.08.2025**
(21) Application number: 24174689.0
(22) Date of filing: 08.05.2024
(51) Int. Cl.: H04L 9/30, H04L 9/00, H04L 9/32

(54) **METHOD OF PROCESSING OPERATIONS OF POLYNOMIAL-BASED SECURITY ALGORITHM AND APPARATUS FOR IMPLEMENTING THE METHOD**
VERFAHREN ZUR VERARBEITUNG VON OPERATIONEN EINES POLYNOMISCHEN SICHERHEITSALGORITHMUS UND VORRICHTUNG ZUR DURCHFÜHRUNG DES VERFAHRENS
PROCÉDÉ DE TRAITEMENT D'OPÉRATIONS D'UN ALGORITHME DE SÉCURITÉ BASÉ SUR UN POLYNOMIAL ET APPAREIL POUR METTRE EN UVRE LE PROCÉDÉ

(30) Priority: 31.05.2023 KR 20230070011
(43) Date of publication of application: 04.12.2024
(73) Proprietor: Samsung SDS Co., Ltd., Seoul (KR); Kookmin University Industry Academy Cooperation Foundation, Seoul 02707 (KR)
(72) Inventor: Lee, Sang Yub, SEOUL (KR); Lee, Jong Hyeok, SEOUL (KR); Han, Jae Seung, SEOUL (KR); Huh, Jae Won, SEOUL (KR); Choi, Keon Hee, SEOUL (KR); Han, Dong Guk, SEOUL (KR); Kwon, Ji Hoon, SEOUL (KR); Yoon, Hyo Jin, SEOUL (KR); Cho, Ji Hoon, SEOUL (KR)
(74) Representative: Glawe, Delfs, Moll

(56) References cited:
- US-A1- 2022 006 630
- US-A1- 2022 012 334
- FOURNARIS APOSTOLOS P ET AL: "Design and leakage assessment of side channel attack resistant binary edwards Elliptic Curve digital signature algorithm architectures", MICROPROCESSORS AND MICROSYSTEMS, IPC BUSINESS PRESS LTD. LONDON, GB, vol. 64, 22 October 2018 (2018-10-22), pages 73 - 87, XP085571663, ISSN: 0141-9331, DOI: 10.1016/J.MICPRO.2018.07.003

## Description

### BACKGROUND

### 1. Field

The present disclosure relates to a method of processing operations of a polynomial-based security algorithm and an apparatus for implementing the method, and more particularly, to a method of processing polynomial operations of a polynomial-based security algorithm to prevent information included in the operations from being exposed by an external attack and an apparatus for implementing the method.

### 2. Description of the Related Art

The National Institute of Standards and Technology (NIST) has been carrying out a public competition project for standardization of post quantum cryptography (PQC) technology since 2016. It selected one key encapsulation mechanism (KEM) and three signature algorithms for standardization in 2022 through three rounds of selection process and conducted a fourth round of selection process for the remaining four KEMs while holding an additional public competition for digital signatures. In addition, as safety from side-channel analysis was included in algorithm selection criteria from a second round, algorithm design teams submitted algorithms implemented to be safe from simple power analysis (SPA) to NIST.

However, even if safety from the SPA is ensured, the results of attacks using various side-channel analysis techniques such as differential power analysis (DPA) and profiling attack are being presented.

In particular, side-channel analysis studies have been conducted on a calculation process using, as its input, secret information of Dilithium, a lattice-based post quantum cryptographic digital signature for which NIST standardization was decided, and the need for a technique to respond to the side-channel analysis has emerged.

In a calculation process of a conventional digital signature algorithm, a shuffling technique for randomly processing the order of unit operations is applied for one type of operations. However, since a different value is used for a random index used for each operation, there is a problem of overload during key generation and signature generation processes. In addition, it is difficult to ensure safety against leakage of random indices from side-channel attacks

Further prior art solutions are disclosed in documents US 2022/012334 A1 and US 2022/006630 A1.

Therefore, in a calculation process of a digital signature algorithm, a shuffling technique that can ensure safety from side-channel attacks is required. In particular, in a calculation process using, as its input, secret information of Dilithium which a lattice-based post quantum cryptographic digital signature, a technology that can prevent the secret information from being leaked is required.

### SUMMARY

The above object is achieved by means of the accompanying set of claims 1 to 13.

Aspects of the present disclosure provide a method of processing operations of a polynomial-based security algorithm, the method capable of ensuring safety from external attacks for operations including secret information in the polynomial-based security algorithm, and an apparatus for implementing the method.

Aspects of the present disclosure also provide a method of processing operations of a polynomial-based security algorithm, the method capable of increasing attack complexity for side-channel attacks by applying shuffling for randomly processing an operation order of operations including secret information in key generation and signature generation processes of a digital signature, and an apparatus for implementing the method.

Aspects of the present disclosure also provide a method of processing operations of a polynomial-based security algorithm, the method capable of reducing overload by using a common shuffling index according to the length or type of operation when applying shuffling to operations including secret information in key generation and signature generation processes of a digital signature, and an apparatus for implementing the method.

Aspects of the present disclosure also provide a method of processing operations of a polynomial-based security algorithm, the method capable of strengthening safety from side-channel attacks by applying a shuffling technique for randomly processing an operation order of operation groups related to secret information in key generation and signature generation processes of a digital signature, and an apparatus for implementing the method.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

According to an aspect of the present disclosure, there is provided a method of processing operations of a polynomial-based security algorithm, the method being performed by a computing system. The method comprises identifying a plurality of operations using secret information in the polynomial-based security algorithm, generating a random index to be applied to the identified operations, and performing the operations using the random index.

In some embodiments, wherein the generating of the random index may comprise generating a random index to be applied to the operations based on operation length or whether the same secret information is used.

In some embodiments, the generating of the random index may comprise obtaining a plurality of parameters used in an operation length for secret information included in each identified operation, and generating a random index to be applied to operations having the same length of each of the parameters among the operations.

In some embodiments, the generating of the random index may comprise generating a random index to be applied to operations having the same operation length among the operations.

In some embodiments, the generating of the random index may comprise generating a first random index to be applied to an operation using first secret information among the operations and generating a second random index to be applied to an operation using second secret information among the operations.

In some embodiments, the generating of the random index may comprise generating different random indices for the operations.

In some embodiments, the method may further comprise identifying a first operation group and a second operation group based on a type of operation and an order of operations, and randomly determining an index for determining an operation order of the first operation group and the second operation group.

In some embodiments, the identifying of the first operation group and the second operation group based on the type of operation and the order of operations may comprise matching the numbers of operations of the first operation group and the second operation group by adding a first dummy operation to the first operation group.

c the identifying of the first operation group and the second operation group based on the type of operation and the order of operations may comprise identifying a first operation included in the first operation group and a second operation included in the second operation group, and matching a length of the first operation with a length of the second operation by adding a second dummy operation to the first operation, wherein the second operation may correspond to the first operation.

In some embodiments, the security algorithm may comprise operations for key generation and signature generation of Dilithium using lattice-based post quantum cryptography.

In some embodiments, the security algorithm may be a digital signature algorithm, and the secret information may be information used to generate a private key.

According to another aspect of the present disclosure, there is provided an apparatus for processing operations of a polynomial-based security algorithm. The apparatus comprises one or more processors, a memory which loads a computer program to be executed by the processors, and a storage which stores the computer program, wherein the computer program comprises instructions for performing: an operation of identifying a plurality of operations using secret information in the polynomial-based security algorithm; an operation of generating a random index to be applied to the identified operations; and an operation of performing the operations using the random index.

In some embodiments, the operation of generating the random index may comprise an operation of generating a random index to be applied to the operations based on operation length or whether the same secret information is used.

In some embodiments, the operation of generating the random index may comprise an operation of obtaining a plurality of parameters used in an operation length for secret information included in each identified operation, and an operation of generating a random index to be applied to operations having the same length of each of the parameters among the operations.

In some embodiments, the operation of generating the random index may comprise an operation of generating a random index to be applied to operations having the same operation length among the operations.

In some embodiments, the operation of generating the random index may comprise an operation of generating a first random index to be applied to an operation using first secret information among the operations and generating a second random index to be applied to an operation using second secret information among the operations.

In some embodiments, the operation of generating the random index may comprise an operation of generating different random indices for the operations.

In some embodiments, the computer program may further comprise instructions for performing: an operation of identifying a first operation group and a second operation group based on a type of operation and an order of operations; and an operation of randomly determining an index for determining an operation order of the first operation group and the second operation group.

In some embodiments, the operation of identifying the first operation group and the second operation group based on the type of operation and the order of operations may comprise an operation of matching the numbers of operations of the first operation group and the second operation group by adding a first dummy operation to the first operation group.

In some embodiments, the operation of identifying the first operation group and the second operation group based on the type of operation and the order of operations may comprise: an operation of identifying a first operation included in the first operation group and a second operation included in the second operation group; and an operation of matching a length of the first operation with a length of the second operation by adding a second dummy operation to the first operation, wherein the second operation may correspond to the first operation.

### BRIEF DESCRIPTION OF THE DRAWINGS

These and/or other aspects will become apparent and more readily appreciated from the following description of the embodiments, taken in conjunction with the accompanying drawings in which:
FIG. 1 is a flowchart illustrating a method of processing operations of a polynomial-based security algorithm according to an embodiment of the present disclosure;
FIG. 2 is a flowchart illustrating a detailed process of an operation illustrated in FIG. 1;
FIG. 3 is a flowchart illustrating additional operations performed after operations illustrated in FIG. 1;
FIG. 4 is a flowchart illustrating a detailed process of an operation illustrated in FIG. 3;
FIG. 5 is an example of Dilithium's key generation process according to embodiments of the present disclosure;
FIG. 6 is a table showing information related to operations to which shuffling is applied in Dilithium's key generation process illustrated in FIG. 5;
FIG. 7 is an example of Dilithium's signature generation process according to embodiments of the present disclosure;
FIGS. 8 and 9 are a table showing information related to operations to which shuffling is applied in Dilithium's signature generation process illustrated in FIG. 7;
FIG. 10 illustrates an example process in which shuffling is applied in Dilithium's key generation process according to embodiments of the present disclosure;
FIG. 11 illustrates an example process in which shuffling is applied in Dilithium's signature generation process according to embodiments of the present disclosure; and
FIG. 12 is a hardware configuration diagram of an example computing system which can implement methods according to an embodiment of the present disclosure.

### DETAILED DESCRIPTION

Hereinafter, preferred embodiments of the present disclosure will be described with reference to the attached drawings. The advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the scope of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, some embodiments of the present disclosure will be described in detail with reference to the accompanying drawings.

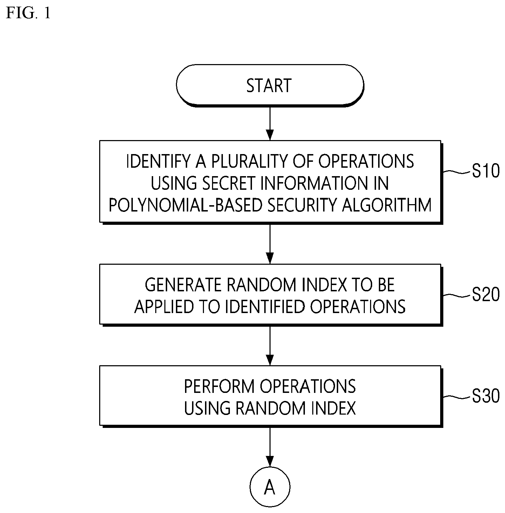

FIG. 1 is a flowchart illustrating a method of processing operations of a polynomial-based security algorithm according to an embodiment of the present disclosure.

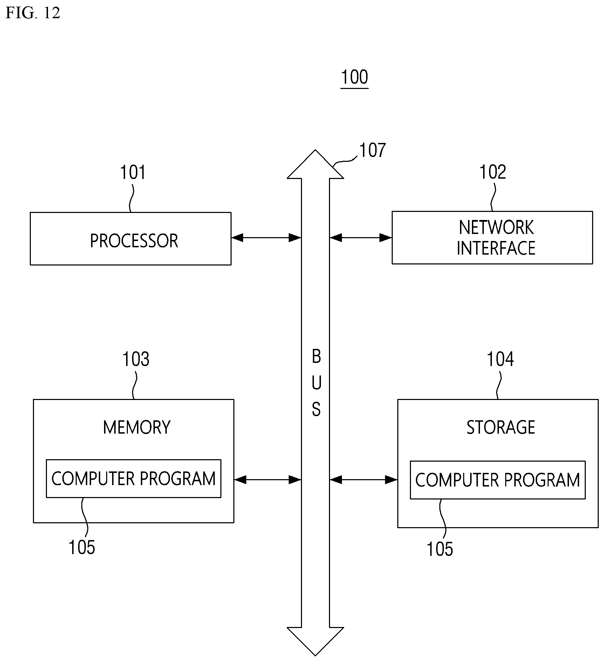

The method of processing the operations of the polynomial-based security algorithm according to the embodiment of the present disclosure may be executed by a computing system 100 illustrated in FIG. 12. The computing system 100 may be, for example, an apparatus for processing operations of a polynomial-based security algorithm. The computing system 100 executing the method according to the current embodiment may be a computing apparatus equipped with an application program execution environment. The computing system 100 may be an apparatus that can perform computational functions, such as a PC, a server, a laptop computer, or a smartphone.

It should be noted that a description of a subject performing some operations included in the method according to the embodiment of the present disclosure may be omitted, and in such a case, the subject is the computing system 100.

According to an embodiment of the present disclosure to be described below, safety from external attacks can be secured for operations including secret information in a polynomial-based security algorithm.

First, in operation S10, the computing system 100 identifies a plurality of operations using secret information in a polynomial-based security algorithm. Here, the polynomial-based security algorithm may be a digital signature algorithm, for example, an algorithm that includes operations for key generation and signature generation of a Dilithium digital signature using lattice-based post quantum cryptography. The secret information may be information used to generate a private key in a digital signature generation process.

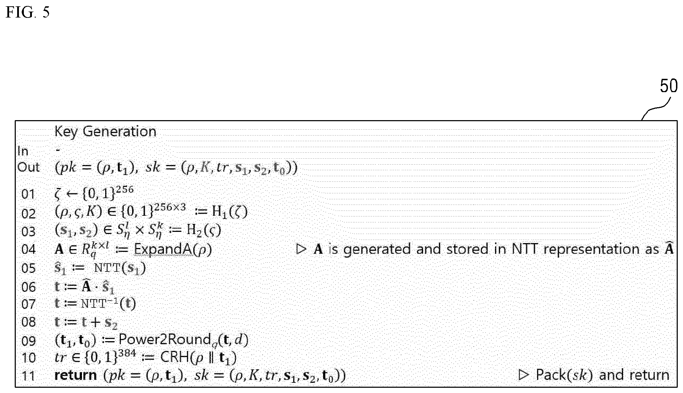

As an example, referring to FIG. 5, in Dilithium's key generation process 50, *K,* **s**₁, **s**₂ and **t**₀ among information included in a private key *sk* correspond to secret information. The computing system 100 may identify operation steps 03, 05, 06, 07, 08 and 09 which are operation steps including the secret information *K*, **s**₁, **s**₂ and **t**₀ or operation steps including variables related to the secret information among a plurality of operation steps included in the key generation process 50.

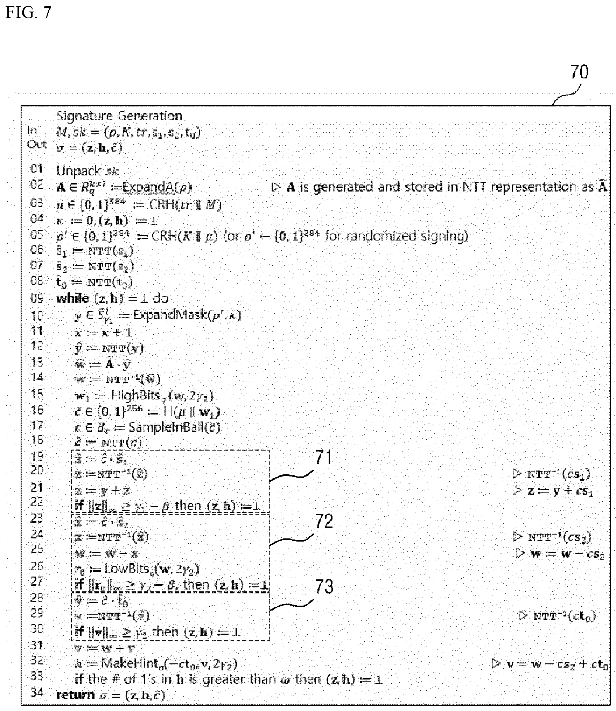

Similarly, referring to FIG. 7, among a plurality of operation steps included in Dilithium's signature generation process 70, operation steps 06, 07, 08, 10, 12, 13, 14, 15, 19, 20, 21, 23, 24, 25, 26, 27, 28, 29, 30, 31 and 32 which are operation steps including secret information *K,* **s**₁, **s**₂ and **t**₀ related to a private key *sk* or operation steps including variables related to the secret information may be identified.

Next, in operation S20, the computing system 100 generates a random index to be applied to the operations identified in operation S10. Finally, in operation S30, the computing system 100 performs the operations using the generated random index.

As an embodiment, when performing operation S20, the computing system 100 may generate a random index to be applied to the operations identified in operation S10 based on operation length or whether the same secret information is used.

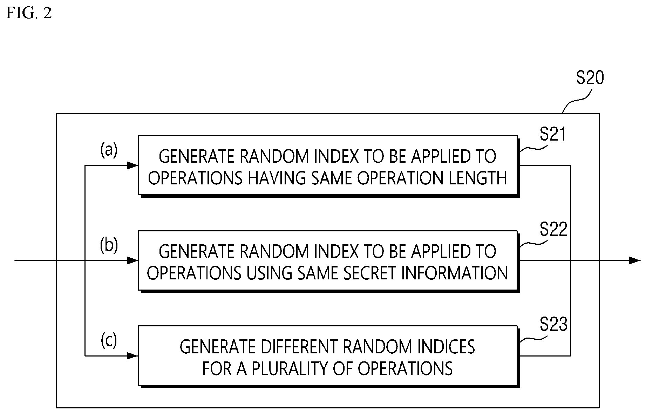

Specifically, as illustrated in FIG. 2, operations S21, S22 and S23 of generating a random index in different ways may be selectively performed in operation S20 of generating a random index.

As an embodiment, in operation S21, the computing system 100 may generate a random index to be applied to operations having the same operation length among the identified operations. Here, the computing system 100 may perform operation S21 in response to mode (a) being selected according to user input.

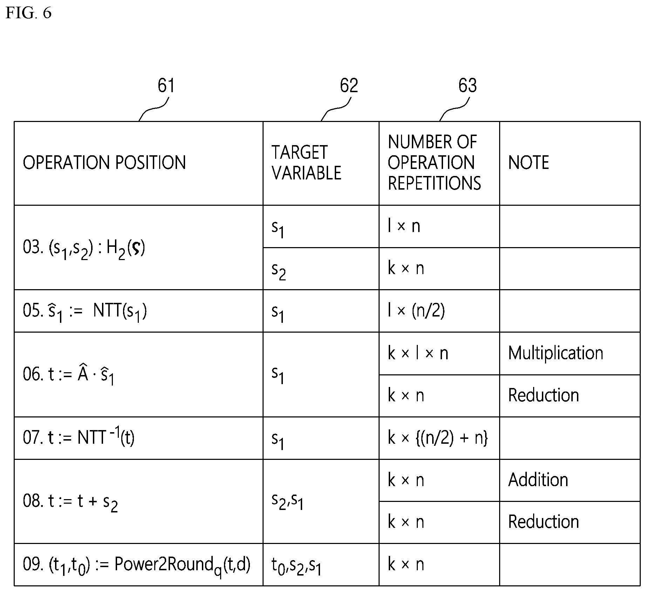

Referring to FIG. 6, for each operation identified as including secret information or related to the secret information in the key generation process 50 of FIG. 5, each operation step (operation position) 61, secret information (target variable) 62 included in each operation step 61, and an operation length (number of operation repetitions) 63 of each operation step 61 are provided in table form.

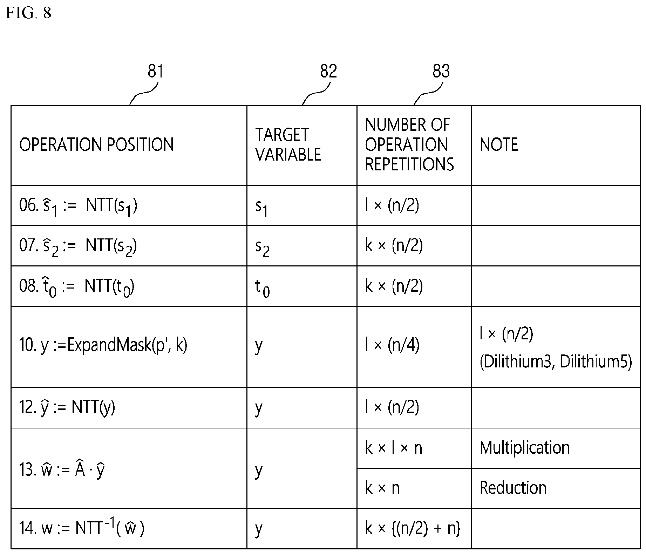

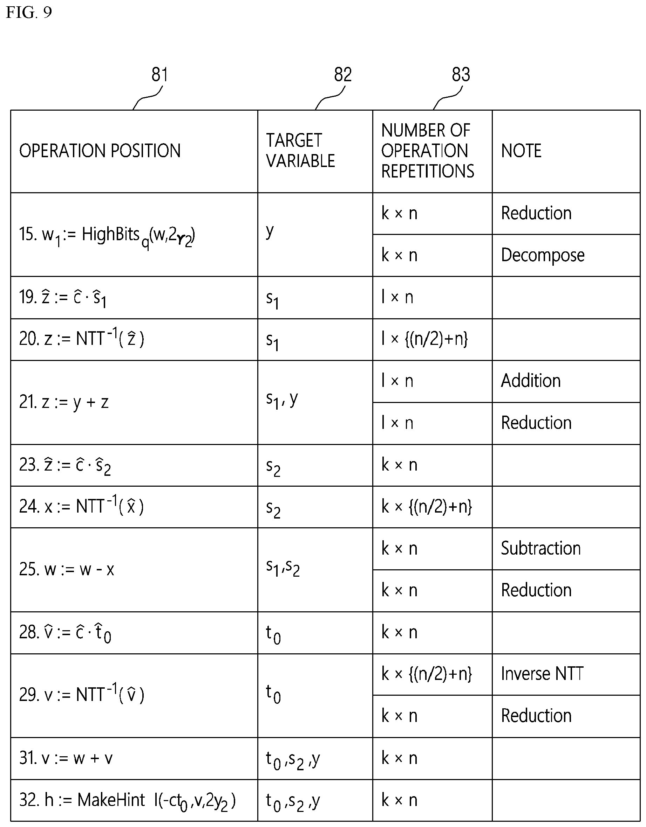

In addition, referring to FIGS. 8 and 9, for each operation identified as including secret information or related to the secret information in the signature generation process 70 of FIG. 7, each operation step (operation position) 81, secret information (target variable) 82 included in each operation step 81, and an operation length (number of operation repetitions) 83 of each operation step 81 are provided in table form.

In the tables of FIGS. 6, 8 and 9, a common index may be generated and applied to operations having the same operation length (number of operation repetitions) 63 or 83 for the secret information (target variable) 62 or 82 in each operation step 61 or 81.

As an example, in the table of FIG. 6, an operation length for secret information **s**₂ in operation step 03.(**s**₁, **s**₂) := H₂( 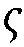 ) and an operation length for secret information **t**₀, **s**₂, **s**₁ in operation step 09. (**t**₁, **t**₀) :=Power2Round*_{q}*(**t**, *d*) are the same, i.e., *k* ×*n*. Therefore, a common random index can be applied to the two operations of operation step 03 and operation step 09.

Similarly, in the table of FIGS. 8 and 9, an operation length for secret information ***y*** in operation step 14. **w** := NTT⁻¹(**ŵ**) and an operation length for secret information ***s***₂ in operation step 24. **x** :=NTT⁻¹(**x̂**) are the same, i.e., *k* × {(*n*/2) + *n*}. Therefore, a common random index can be applied to the two operations of operation step 14 and operation step 24.

As an embodiment, the computing system 100 may obtain a plurality of parameters used in an operation length for secret information included in each identified operation and generate a random index to be applied to operations having the same length of each of the parameters among the operations.

As an example, in the tables of FIGS. 6, 8 and 9, the computing system 100 may identify six parameters *n, l, k, n*/2, *n*/4 *and n*/8 used in the operation length (number of operation repetitions) 63 for the secret information (target variable) 62 in each operation step 61 or 81 and apply a common random index to operations using the six identified parameters.

In this case, since only six random numbers are generated for all operations of the key generation process 50 and the signature generation process 70 and applied to an operation using each parameter, it is possible to reduce overload and prevent leakage of secret information through the generation of the minimum number of random indices.

As described above, when shuffling is applied to operations including secret information, a common random index may be used for operations having the same operation length or operations having the same length of a parameter used in the secret information. Therefore, it is possible to reduce overload and reduce the efficiency of side-channel attacks.

As an embodiment, in operation S22, the computing system 100 may generate a first random index to be applied to an operation using first secret information among the identified operations and generate a second random index to be applied to an operation using second secret information among the operations. Here, the computing system 100 may perform operation S22 in response to mode (b) being selected according to user input.

As an embodiment, when performing operation S22, the computing system 100 may apply the first random index to an operation using the first secret information among operations having the same operation length among the identified operations and may apply the second random index to an operation using the second secret information.

As an example, in the table of FIG. 6, a common random index may not be applied to operation step 03. (s₁, s₂) := H₂( 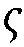 ), operation step 06. t := Â · ŝ₁, operation step 08. t := t + s₂, and operation step 09. (t₁, t₀) :=Power2Round*_{q}*(t, *d*) having the same operation length of *k* × *n*. Different random indices may be applied to operations having different associated secret information even if the operations have the same operation length. That is, the first random index may be applied to operation step 08 whose associated secret information is (s₂, s₁), the second random index may be applied to operation step 09 whose associated secret information is (t₀, s₂, s₁), a third random index may be applied to operation step 06 whose associated secret information is s₁, and a fourth random index may be applied to operation step 03 whose associated secret information is s₂.

In addition, in the table of FIGS. 8 and 9, a common (1-1)^{th} random index may be applied to operation steps 13 and 15 whose associated secret information is **y** among operation steps having the same operation length of *k* × *n*, a (2-1)^{th} random index may be applied to operation step 23 whose associated secret information is **s**₂, a (3-1)^{th} random index may be applied to operation step 25 whose associated secret information is (**s₁**, **s₂**), a common (4-1)^{th} random index may be applied to operation steps 28 and 29 whose associated secret information is **t**₀, and a (5-1)^{th} random index may be applied to operation step 31 whose associated secret information is (t₀, s₂, y).

As described above, when shuffling is applied to operations including secret information, operations having the same associated secret information among operations having the same operation length but different associated secret information may be grouped together, and a common random index may be applied to the grouped operations. This can increase attack complexity for side-channel attacks.

As an embodiment, in operation S23, the computing system 100 may generate different random indices for the identified operations. Here, the computing system 100 may perform operation S23 in response to mode (c) being selected according to user input.

As an example, in the table of FIG. 6, different random indices may be applied to operation steps regardless of whether the operation steps have the same operation length or associated secret information. Similarly, in the table of FIGS. 8 and 9, different random indices may also be applied to operation steps.

In this case, since a random number is generated for each of all operations of the key generation process 50 and the signature generation process 70, a greater number of random indices than the number of random indices generated in operation S21 corresponding to mode (a) and the number of random indices generated in operation S22 corresponding to mode (b) are generated.

According to the embodiment of the present disclosure described above, in a polynomial-based security algorithm, when shuffling is applied to operations including secret information to prevent leakage of the secret information by external attacks, a random index may be applied in various ways in consideration of whether the operations have the same operation length and whether the operations use the same secret information.

By classifying operations in various ways according to shuffling complexity and applying the same index to operations having the same complexity, it is possible to minimize the load of random index generation and reduce overload in the entire key generation and signature generation processes. In addition, by applying a random index according to shuffling complexity, it is possible to secure safety against leakage of the random index.

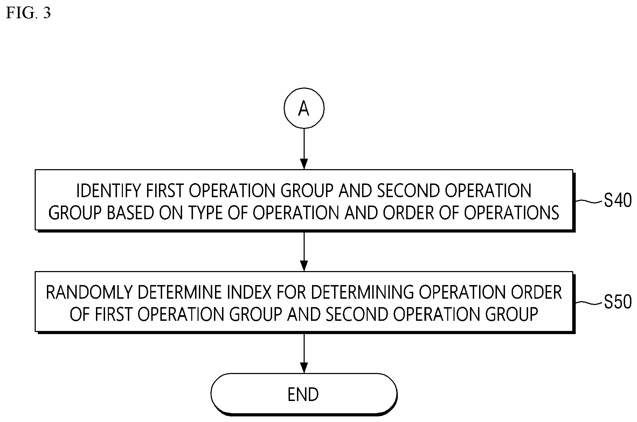

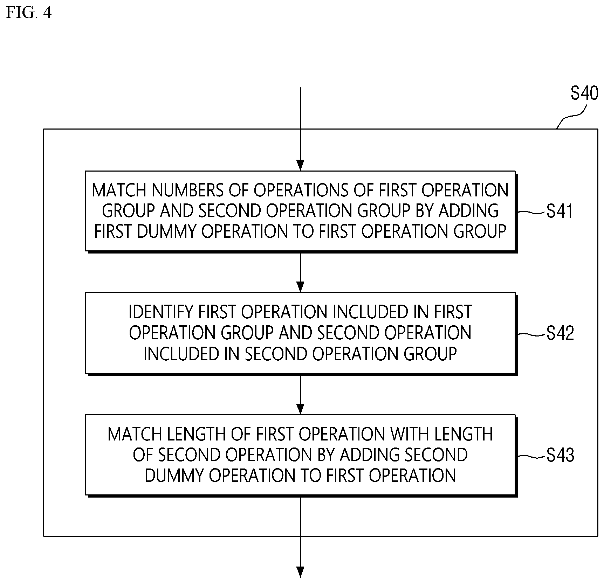

Operations additionally performed after the operations illustrated in FIG. 1 will now be described using FIGS. 3 and 4.

Referring to FIG. 3, the computing system 100 may additionally perform operations S40 and S50 after performing operations S10 through S30 described in FIG. 1.

In operation S40, the computing system 100 identifies a first operation group and a second operation group based on the type of operation and the order of operations. Here, the number of operation groups identified may be determined by the number of pieces of secret information used in a calculation process. That is, if there are two pieces of secret information, two operation groups including operations related to each piece of secret information may be identified. If there are three pieces of secret information, three operation groups including operations related to each piece of secret information may be identified.

As an example, in the signature generation process 70 of FIG. 7, a first operation group 71 associated with the secret information s₁, a second operation group 72 associated with the secret information s₂, and a third operation group 73 associated with the secret information t₀ may be identified.

Referring to FIG. 4, operation S40 may include operations S41 through S43 as detailed operations.

In operation S41, the computing system 100 may match the numbers of operations of the first operation group and the second operation group by adding a first dummy operation to the first operation group.

In operation S42, the computing system 100 may identify a first operation included in the first operation group and a second operation included in the second operation group. In operation S43, the computing system 100 may match a length of the first operation with a length of the second operation by adding a second dummy operation to the first operation. Here, the second operation may correspond to the first operation.

As an embodiment, in relation to operation S41, the computing system 100 may perform normalization on each of the first operation group 71, the second operation group 72, and the third operation group 73 to match the types of operations using secret information, the orders of operations, and the numbers of operations.

As an example, as illustrated in FIG. 7, a polynomial multiplication operation of c and s₁, s₂, or t₀ which is secret information may be performed as a first operation for each of the first operation group 71, the second operation group 72, and the third operation group 73 (operation steps 19, 23 and 28). Next, for each of the first operation group 71 and the second operation group 72, a polynomial addition operation or a polynomial subtraction operation using the result value of the first operation as its input may be performed as a second operation for s₁ or s₂ which is secret information (operation steps 21 and 25). Here, a dummy addition operation may be added to the third operation group 73 as an operation for matching the order of operations and the number of operations with those of the first operation group 71 and the second operation group 72.

If normalization is performed on each of the first operation group 71, the second operation group 72 and the third operation group 73 as described above, whether a normalized value (norm) for each secret information s₁, s₂, or t₀ is within a preset range can be checked for each of the operations groups 71 through 73 in the signature generation process 70 of FIG. 7 (operation steps 22, 27 and 30).

Even if normalization is performed on each of the operation groups 71 through 73 in operation S41, if lengths of unit operations within each operation group 71, 72 or 73 are different, there may be a difference in execution time between the operation groups 71 through 73. If there is a difference in execution time between the operation groups, each operation group can be distinguished using side-channel information. Therefore, there is a problem that information about each operation group may be exposed.

In order to solve the problem of the difference in execution time between the operation groups, in relation to operations S42 and S43, the computing system 100 may perform an operation of matching the lengths of the unit operations included in each operation group, so that there is no difference in execution time between the operation groups.

A length of each unit operation included in each operation group 71, 72 or 73 of FIG. 7 is determined by a length *k* or *l* of an input vector. Here, a length of the secret information s₁ included in each unit operation is *l*, and lengths of the secret information s₂ and t₀ are *k.*

As an example, at Dilithium's security levels 2, 3 and 5, (*k, l*) is (4, 4), (6, 5) and (8, 7), respectively. Here, since *k* is greater than *l* at the security level 3 or 5, even if each operation group is normalized, there is a difference in execution time between the operation groups. Thus, the operation groups can be distinguished from each other. In order to make this distinction impossible, all unit operations may be matched to an operation for length *k* or an operation for length *l* by adding a dummy operation to all unit operations included in each operation group.

Referring again to FIG. 3, in operation S50, the computing system 100 randomly determines an index for determining the operation order of the first operation group and the second operation group identified in operation S40. Here, the first operation group and the second operation group may be groups which have been normalized through operations S41 through S43 to match the types of operations, the orders of operations, and the numbers of operations.

As an example, in the signature generation process 70 of FIG. 7, the computing system 100 may generate a random permutation consisting of {0, 1, 2} by using a random number generated by a random number generator (not illustrated) and apply the random permutation to the execution order of the operation groups 71 through 73. Here, elements 0, 1, and 2 of the random permutation may correspond to the operation groups 71, 72, and 73 corresponding to the secret information s₁, s₂, and t₀, respectively.

Accordingly, since the order of the elements of the random permutation changes whenever a 'while' statement of operation step 09 is repeated in the signature generation process 70 of FIG. 7, the execution order of the operation groups 71 through 73 may be determined randomly.

Since the execution order of the operation groups 71 through 73 changes whenever the 'while' statement is repeated as described above, even if an attacker attempting a side-channel attack identifies and collects a power waveform corresponding to each normalized operation group 71, 72 or 73, it is not possible to know what secret information the waveform corresponds to. Therefore, secret information can be prevented from being exposed by increasing attack complexity of a side-channel attack through shuffling of the execution order of operation groups.

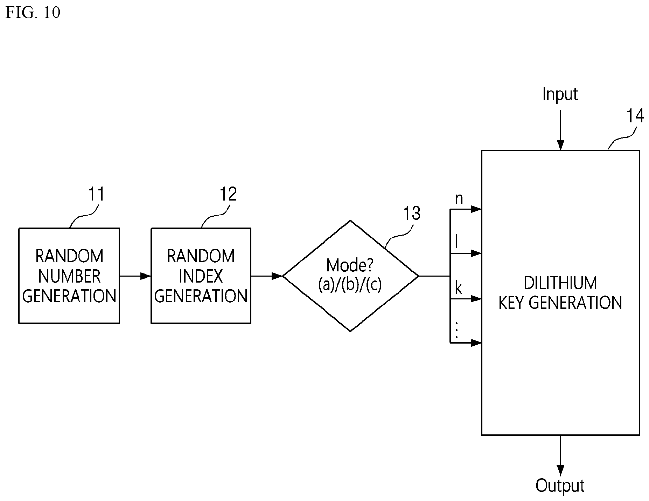

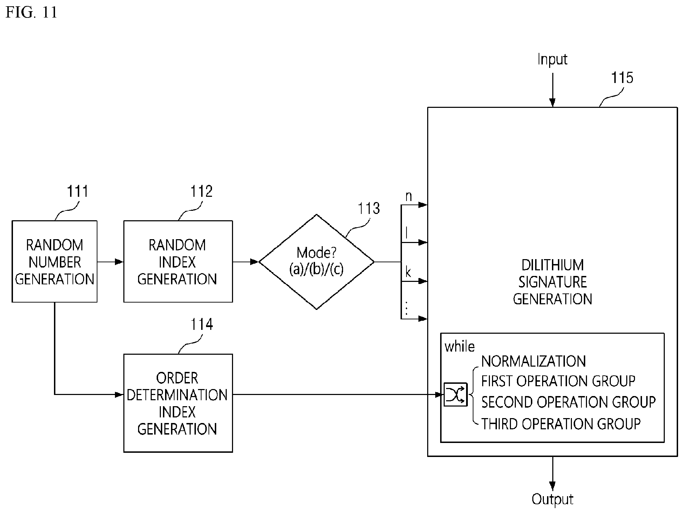

In FIGS. 10 and 11, processes in which shuffling is applied during Dilithium's key generation and signature generation described above with reference to FIGS. 5 through 9 will be compared and described.

In an example illustrated in FIG. 10, the computing system 100 may generate a random number (11) and generate a random index using the generated random number (12) to apply shuffling to a plurality of operations including secret information *K,* **s**₁, **s**₂ and **t**₀ in Dilithium's key generation process 14. Here, the generation of the random number and the generation of the random index may be respectively processed by separate devices or modules within the computing system 100.

The computing system 100 may apply the random index to the operations including the secret information in a different way according to the mode selected according to user settings. When the mode is set to mode (a), the computing system 100 may apply a common random index to operations having the same operation length. When the mode is set to mode (b), the computing system 100 may apply a common random index to operations using the same secret information. In addition, when the mode is set to mode (c), the computing system 100 may apply different random indices to a plurality of operations. Here, a smallest number of random numbers may be generated in the case of mode (a), and a largest number of random numbers may be generated in the case of mode (c).

Accordingly, the computing system 100 can reduce the efficiency of side-channel attacks on the operations using the secret information in the key generation process 14 by processing the operations including the secret information by applying various random indices such as modes (a), (b) and (c) to the operations.

In an example illustrated in FIG. 11, the computing system 100 may generate a random number (111) and generate a random index using the generated random number (112) to apply shuffling to a plurality of operations including secret information *K,* **s**₁, **s**₂ and **t**₀ in Dilithium's signature generation process 115, as in the key generation process 14. In addition, the computing system 100 may process the operations including the secret information by applying various random indices such as modes (a), (b) and (c) to the operations as in the key generation process 14.

In addition, as an additional shuffling technique, the computing system 100 may generate an order determination index (114) for randomly determining the execution order of a plurality of operation groups in the signature generation process 115 by using the generated random number. Here, the operation groups may be groups including operations associated with each secret information. The computing system 100 may perform normalization on the operation groups to match the types of operations, the orders of operations, and the numbers of operations. In addition, a dummy operation may be added to match lengths of unit operations included in each operation group.

According to the embodiment of the present disclosure described above, in a digital signature's key generation and signature generation processes, it is possible to increase attack complexity for side-channel attacks by applying shuffling for randomly processing the operation order of operations including secret information and possible to further strengthen safety from the side-channel attacks by additionally applying shuffling for randomly processing the operation order of operation groups related to secret information.

FIG. 12 is a hardware configuration diagram of an exemplary computing system 100.

Referring to FIG. 12, the computing system 100 may include one or more processors 101, a bus 107, a network interface 102, a memory 103, which loads a computer program 105 executed by the processors 101, and a storage 104 for storing the computer program 105.

The processor 101 controls overall operations of each component of computing device 100. The processor 101 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 101 may perform calculations on at least one application or program for executing a method/operation according to various embodiments of the present disclosure. The computing system 100 may have one or more processors.

The memory 103 stores various data, instructions and/or information. The memory 103 may load one or more programs 105 from the storage 104 to execute methods/operations according to various embodiments of the present disclosure. An example of the memory 103 may be a RAM, but is not limited thereto.

The bus 107 provides communication between components of computing system 100. The bus 107 may be implemented as various types of bus such as an address bus, a data bus and a control bus.

The network interface 102 supports wired and wireless internet communication of the computing system 100. The network interface 102 may support various communication methods other than internet communication. To this end, the network interface 102 may be configured to comprise a communication module well known in the art of the present disclosure.

The storage 104 can non-temporarily store one or more computer programs 105. The storage 104 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

As an embodiment, a computer program 105 may include instructions for performing an operation of identifying a plurality of operations using secret information in a polynomial-based security algorithm, an operation of generating a random index to be applied to the identified operations, and an operation of performing the operations using the random index.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications can be made to the preferred embodiments without substantially departing from the principles of the present disclosure. Therefore, the disclosed preferred embodiments of the disclosure are used in a generic and descriptive sense only and not for purposes of limitation.

## Claims

1. A method of processing operations of a polynomial-based security algorithm, the method being performed by a computing system and comprising:
identifying a plurality of operations using secret information (62, 82) in the polynomial-based security algorithm;
generating a random index to be applied to the identified operations; and
performing the operations using the random index,
wherein the generating of the random index comprises:
obtaining a plurality of parameters used in an operation length (63, 83) for secret information (62, 82) included in each identified operation; and
generating a common random index which is applied to operations having the same length of each of the parameters or to operations having the same operation length (63, 83) among the operations.

2. The method of claim 1, wherein the generating of the random index comprises generating a random index to be applied to the operations based on operation length (63, 83) or whether the same secret information (62, 82) is used.

3. The method of claim 1, wherein the generating of the random index comprises generating a first random index to be applied to an operation using first secret information among the operations and generating a second random index to be applied to an operation using second secret information among the operations.

4. The method of claim 1, wherein the generating of the random index comprises generating different random indices for the operations.

5. The method of claim 1, further comprising:
identifying a first operation group and a second operation group based on a type of operation and an order of operations; and
randomly determining an index for determining an operation order of the first operation group and the second operation group.

6. The method of claim 5, wherein the identifying of the first operation group and the second operation group based on the type of operation and the order of operations comprises matching the numbers of operations of the first operation group and the second operation group by adding a first dummy operation to the first operation group, or matching a length of a first operation included in the first operation group with a length of a second operation included in the second operation group by adding a second dummy operation to the first operation.

7. The method of claim 1, wherein the security algorithm is a digital signature algorithm including operations for key generation and signature generation of Dilithium using lattice-based post quantum cryptography, and the secret information is information used to generate a private key.

8. An apparatus for processing operations of a polynomial-based security algorithm, the apparatus comprising:
one or more processors;
a memory which loads a computer program to be executed by the processors; and
a storage which stores the computer program,
wherein the computer program comprises instructions for performing:
an operation of identifying a plurality of operations using secret information (62, 82) in the polynomial-based security algorithm;
an operation of generating a random index to be applied to the identified operations; and
an operation of performing the operations using the random index,
wherein the operation of generating the random index comprises:
an operation of obtaining a plurality of parameters used in an operation length (63, 83) for secret information (62, 82) included in each identified operation; and
an operation of generating a common random index to be applied to operations having the same length of each of the parameters or operations having the same operation length (63, 83) among the operations.

9. The apparatus of claim 8, wherein the operation of generating the random index comprises an operation of generating a random index to be applied to the operations based on operation length (63, 83) or whether the same secret information is used.

10. The apparatus of claim 8, wherein the operation of generating the random index comprises an operation of generating a first random index to be applied to an operation using first secret information among the operations and generating a second random index to be applied to an operation using second secret information among the operations.

11. The apparatus of claim 8, wherein the operation of generating the random index comprises an operation of generating different random indices for the operations.

12. The apparatus of claim 8, further comprising:
an operation of identifying a first operation group and a second operation group based on a type of operation and an order of operations; and
an operation of randomly determining an index for determining an operation order of the first operation group and the second operation group.

13. The apparatus of claim 12, wherein the operation of identifying the first operation group and the second operation group based on the type of operation and the order of operations comprises an operation of matching the numbers of operations of the first operation group and the second operation group by adding a first dummy operation to the first operation group, or matching a length of a first operation included in the first operation group with a length of a second operation included in the second operation group by adding a second dummy operation to the first operation.

## Patentansprüche

1. Verfahren zum Verarbeiten von Operationen eines polynombasierten Sicherheitsalgorithmus, wobei das Verfahren durch ein Rechensystem durchgeführt wird und Folgendes umfasst:
Identifizieren mehrerer Operationen unter Verwendung von geheimen Informationen (62, 82) in dem polynombasierten Sicherheitsalgorithmus;
Erzeugen eines Zufallsindexes, der auf die identifizierten Operationen anzuwenden ist; und
Durchführen der Operationen unter Verwendung des Zufallsindexes,
wobei das Erzeugen des Zufallsindex Folgendes umfasst:
Erhalten mehrerer Parameter, die in einer Operationslänge (63, 83) für geheime Informationen (62, 82) verwendet werden, die in jeder identifizierten Operation enthalten sind; und
Erzeugen eines gemeinsamen Zufallsindexes, der auf Operationen mit der gleichen Länge jedes der Parameter oder auf Operationen mit der gleichen Operationslänge (63, 83) unter den Operationen angewendet wird.

2. Verfahren nach Anspruch 1, wobei das Erzeugen des Zufallsindexes das Erzeugen eines Zufallsindexes umfasst, der auf die Operationen basierend auf der Operationslänge (63, 83) anzuwenden ist oder ob die gleichen geheimen Informationen (62, 82) verwendet werden.

3. Verfahren nach Anspruch 1, wobei das Erzeugen des Zufallsindexes das Erzeugen eines ersten Zufallsindexes, der auf eine Operation unter Verwendung erster geheimer Informationen unter den Operationen anzuwenden ist, und Erzeugen eines zweiten Zufallsindexes, der auf eine Operation unter Verwendung zweiter geheimer Informationen unter den Operationen anzuwenden ist, umfasst.

4. Verfahren nach Anspruch 1, wobei das Erzeugen des Zufallsindexes das Erzeugen unterschiedlicher Zufallsindizes für die Operationen umfasst.

5. Verfahren nach Anspruch 1, das ferner Folgendes umfasst:
Identifizieren einer ersten Operationsgruppe und einer zweiten Operationsgruppe basierend auf einer Art von Operation und einer Reihenfolge von Operationen; und
zufälliges Bestimmen eines Indexes zum Bestimmen einer Operationsreihenfolge der ersten Operationsgruppe und der zweiten Operationsgruppe.

6. Verfahren nach Anspruch 5, wobei das Identifizieren der ersten Operationsgruppe und der zweiten Operationsgruppe basierend auf der Art der Operation und der Reihenfolge der Operationen das Abgleichen der Anzahlen von Operationen der ersten Operationsgruppe und der zweiten Operationsgruppe durch Hinzufügen einer ersten Dummy-Operation zu der ersten Operationsgruppe umfasst, oder Abgleichen einer Länge einer ersten Operation, die in der ersten Operationsgruppe enthalten ist, mit einer Länge einer zweiten Operation, die in der zweiten Operationsgruppe enthalten ist, durch Hinzufügen einer zweiten Dummy-Operation zu der ersten Operation.

7. Verfahren nach Anspruch 1, wobei der Sicherheitsalgorithmus ein digitaler Signaturalgorithmus ist, der Operationen zur Schlüsselerzeugung und Signaturerzeugung von Dilithium unter Verwendung gitterbasierter Post-Quanten-Kryptographie beinhaltet, und die geheimen Informationen Informationen sind, die zum Erzeugen eines privaten Schlüssels verwendet werden.

8. Einrichtung zum Verarbeiten von Operationen eines polynombasierten Sicherheitsalgorithmus, wobei die Einrichtung Folgendes umfasst:
einen oder mehrere Prozessoren;
einen Arbeitsspeicher, der ein Computerprogramm lädt, das von dem Prozessor ausgeführt wird; und
einen Speicher, der das Computerprogramm speichert,
wobei das Computerprogramm Anweisungen zum Durchführen von Folgendem umfasst:
eine Operation zum Identifizieren mehrerer Operationen unter Verwendung von geheimen Informationen (62, 82) in dem polynombasierten Sicherheitsalgorithmus;
eine Operation zum Erzeugen eines Zufallsindexes, der auf die identifizierten Operationen anzuwenden ist; und
eine Operation zum Durchführen der Operationen unter Verwendung des Zufallsindexes, wobei die Operation zum Erzeugen des Zufallsindexes Folgendes umfasst:
eine Operation zum Erhalten mehrerer Parameter, die in einer Operationslänge (63, 83) für geheime Informationen (62, 82) verwendet werden, die in jeder identifizierten Operation enthalten sind; und
eine Operation zum Erzeugen eines gemeinsamen Zufallsindex, der auf Operationen mit der gleichen Länge jedes der Parameter oder Operationen mit der gleichen Operationslänge (63, 83) unter den Operationen anzuwenden ist.

9. Einrichtung nach Anspruch 8, wobei die Operation zum Erzeugen des Zufallsindexes eine Operation zum Erzeugen eines Zufallsindexes umfasst, der auf die Operationen basierend auf der Operationslänge anzuwenden ist (63, 83) oder ob die gleichen geheimen Informationen verwendet werden.

10. Einrichtung nach Anspruch 8, wobei die Operation zum Erzeugen des Zufallsindexes eine Operation zum Erzeugen eines ersten Zufallsindex, der auf eine Operation unter Verwendung erster geheimer Informationen unter den Operationen anzuwenden ist, und zum Erzeugen eines zweiten Zufallsindexes, der auf eine Operation unter Verwendung zweiter geheimer Informationen unter den Operationen anzuwenden ist, umfasst.

11. Einrichtung nach Anspruch 8, wobei die Operation zum Erzeugen des Zufallsindexes eine Operation zum Erzeugen verschiedener Zufallsindizes für die Operationen umfasst.

12. Einrichtung nach Anspruch 8, die ferner Folgendes umfasst:
eine Operation zum Identifizieren einer ersten Operationsgruppe und einer zweiten Operationsgruppe basierend auf einer Art von Operation und einer Reihenfolge von Operationen; und
eine Operation zum zufälligen Bestimmen eines Indexes zum Bestimmen einer Operationsreihenfolge der ersten Operationsgruppe und der zweiten Operationsgruppe.

13. Einrichtung nach Anspruch 12, wobei die Operation des Identifizierens der ersten Operationsgruppe und der zweiten Operationsgruppe basierend auf der Art der Operation und der Reihenfolge der Operationen einen Vorgang des Abgleichens der Anzahlen von Operationen der ersten Operationsgruppe und der zweiten Operationsgruppe durch Hinzufügen einer ersten Dummy-Operation zu der ersten Operationsgruppe umfasst, oder Abgleichen einer Länge einer ersten Operation, die in der ersten Operationsgruppe enthalten ist, mit einer Länge einer zweiten Operation, die in der zweiten Operationsgruppe enthalten ist, durch Hinzufügen einer zweiten Dummy-Operation zu der ersten Operation.

## Revendications

1. Procédé de traitement d'opérations d'un algorithme de sécurité à base polynomiale, le procédé étant réalisé par un système informatique et
comprenant :
l'identification d'une pluralité d'opérations en utilisant des informations secrètes (62, 82) dans l'algorithme de sécurité à base polynomiale ;
la génération d'un indice aléatoire destiné à être appliqué aux opérations identifiées ; et
la réalisation des opérations en utilisant l'indice aléatoire,
dans lequel la génération de l'indice aléatoire comprend :
l'obtention d'une pluralité de paramètres utilisés dans une longueur d'opération (63, 83) pour des informations secrètes (62, 82) incluses dans chaque opération identifiée ; et
la génération d'un indice aléatoire commun qui est appliqué à des opérations ayant la même longueur de chacun des paramètres ou à des opérations ayant la même longueur d'opération (63, 83) parmi les opérations.

2. Procédé de la revendication 1, dans lequel la génération de l'indice aléatoire comprend la génération d'un indice aléatoire destiné à être appliqué aux opérations sur la base de la longueur d'opération (63, 83) ou du fait que les mêmes informations secrètes (62, 82) sont utilisées ou non.

3. Procédé de la revendication 1, dans lequel la génération de l'indice aléatoire comprend la génération d'un premier indice aléatoire destiné à être appliqué à une opération en utilisant des premières informations secrètes parmi les opérations, et la génération d'un second indice aléatoire destiné à être appliqué à une opération en utilisant des secondes informations secrètes parmi les opérations.

4. Procédé de la revendication 1, dans lequel la génération de l'indice aléatoire comprend la génération d'indices aléatoires différents pour les opérations.

5. Procédé de la revendication 1, comprenant en outre :
l'identification d'un premier groupe d'opérations et d'un second groupe d'opérations sur la base d'un type d'opération et d'un ordre d'opérations ; et
la détermination aléatoire d'un indice pour déterminer un ordre d'opérations du premier groupe d'opérations et du second groupe d'opérations.

6. Procédé de la revendication 5, dans lequel l'identification du premier groupe d'opérations et du second groupe d'opérations sur la base du type d'opération et de l'ordre d'opérations comprend l'appariement des nombres d'opérations du premier groupe d'opérations et du second groupe d'opérations en ajoutant une première opération factice au premier groupe d'opérations, ou l'appariement d'une longueur d'une première opération incluse dans le premier groupe d'opérations avec une longueur d'une seconde opération incluse dans le second groupe d'opérations en ajoutant une seconde opération factice à la première opération.

7. Procédé de la revendication 1, dans lequel l'algorithme de sécurité est un algorithme de signature numérique incluant des opérations pour génération de clef et génération de signature de Dilithium en utilisant une cryptographie post-quantique basée sur treillis, et les informations secrètes sont des informations utilisées pour générer une clef privée.

8. Appareil pour traiter des opérations d'un algorithme de sécurité à base polynomiale, l'appareil comprenant :
un ou plusieurs processeurs ;
une mémoire qui charge un programme d'ordinateur destiné à être exécuté par les processeurs ; et
un stockage qui stocke le programme d'ordinateur, dans lequel le programme d'ordinateur comprend des instructions pour réaliser :
une opération d'identification d'une pluralité d'opérations en utilisant des informations secrètes (62, 82) dans l'algorithme de sécurité à base polynomiale ;
une opération de génération d'un indice aléatoire destiné à être appliqué aux opérations identifiées ; et
une opération de réalisation des opérations en utilisant l'indice aléatoire, dans lequel l'opération de génération de l'indice aléatoire comprend :
une opération d'obtention d'une pluralité de paramètres utilisés dans une longueur d'opération (63, 83) pour des informations secrètes (62, 82) incluses dans chaque opération identifiée ; et
une opération de génération d'un indice aléatoire commun destiné à être appliqué à des opérations ayant la même longueur de chacun des paramètres ou des opérations ayant la même longueur d'opération (63, 83) parmi les opérations.

9. Appareil de la revendication 8, dans lequel l'opération de génération de l'indice aléatoire comprend une opération de génération d'un indice aléatoire destiné à être appliqué aux opérations sur la base de la longueur d'opération (63, 83) ou du fait que les mêmes informations secrètes sont utilisées ou non.

10. Appareil de la revendication 8, dans lequel l'opération de génération de l'indice aléatoire comprend une opération de génération d'un premier indice aléatoire destiné à être appliqué à une opération en utilisant des premières informations secrètes parmi les opérations et de génération d'un second indice aléatoire destiné à être appliqué à une opération en utilisant des secondes informations secrètes parmi les opérations.

11. Appareil de la revendication 8, dans lequel l'opération de génération de l'indice aléatoire comprend une opération de génération d'indices aléatoires différents pour les opérations.

12. Appareil de la revendication 8, comprenant en outre :
une opération d'identification d'un premier groupe d'opérations et d'un second groupe d'opérations sur la base d'un type d'opération et d'un ordre d'opérations ; et
une opération de détermination aléatoire d'un indice pour déterminer un ordre d'opérations du premier groupe d'opérations et du second groupe d'opérations.

13. Appareil de la revendication 12, dans lequel l'opération d'identification du premier groupe d'opérations et du second groupe d'opérations sur la base du type d'opération et de l'ordre d'opérations comprend une opération d'appariement des nombres d'opérations du premier groupe d'opérations et du second groupe d'opérations en ajoutant une première opération factice au premier groupe d'opérations, ou d'appariement d'une longueur d'une première opération incluse dans le premier groupe d'opérations avec une longueur d'une seconde opération incluse dans le second groupe d'opérations en ajoutant une seconde opération factice à la première opération.
